# FASCICULE DE BREVET EUROPEEN

(11) **EP 3 188 626 B1**
(45) Date de publication et mention de la délivrance du brevet: **26.02.2025**
(21) Numéro de dépôt: 15780757.9
(22) Date de dépôt: 01.09.2015
(51) Int. Cl.: A47J 31/36

(54) **PROCEDE DE PREPARATION D'UN EXTRAIT DE CAFE ET MACHINE POUR LA MISE EN OEUVRE DE CE PROCEDE**
VERFAHREN ZUM ZUBEREITEN EINES KAFFEEEXTRAKTS UND MASCHINE ZUR IMPLEMENTIERUNG DIESES VERFAHRENS
METHOD FOR PREPARING A COFFEE EXTRACT AND MACHINE FOR IMPLEMENTING SAID METHOD

(30) Priorité: 02.09.2014 CH 13272014
(43) Date de publication de la demande: 12.07.2017
(73) Titulaire: IP Evolution SA, 1205 Genève (CH)
(72) Inventeur: EL ALEJ, Ali, 1219 Châtelaine (CH)
(74) Mandataire: Omnis-IP
(86) Numéro de dépôt international: PCT/CH2015/000125
(87) Numéro de publication internationale: WO 2016/033702

(56) Documents cités:
- EP-A1- 1 510 160
- EP-A1- 1 529 469
- WO-A1-2006/003115
- KR-A- 20120 117 321
- KR-A- 20120 117 322

## Description

### Domaine technique

Le domaine technique de la présente invention concerne une machine pour produire un extrait de café par le passage forcé d'une quantité déterminée d'eau chaude sous pression, injectée dans une dose de grains de café torréfié moulus qui sont contenus dans une capsule, constituée d'un corps et d'un couvercle de fermeture étanche rendu solidaire dudit corps, dans lequel l'extrait de café s'écoule à travers des perforations ménagées dans ledit couvercle de fermeture étanche pour être recueilli dans un récipient approprié, dans lequel on injecte l'eau chaude sous pression dans ladite dose de grains de café moulus au moyen d'au moins un dispositif d'injection, à travers ledit couvercle de fermeture, ladite machine comportant :
un premier sous-ensemble comportant un générateur d'eau chaude sous pression ;
un deuxième sous-ensemble comportant un support de ladite capsule pourvu d'une cavité servant de logement audit corps de ladite capsule;
un troisième sous-ensemble équipé de moyens d'injection pour injecter l'eau chaude dans ladite capsule; et
un quatrième sous-ensemble pour recueillir ledit extrait de café.

### Technique antérieure

Pour préparer un café en extrayant les arômes contenus dans une dose de mouture de café, il est connu de faire passer de l'eau chaude sous pression à travers le café moulu, et de recueillir l'extrait de café avec ses arômes ainsi obtenu. De nombreuses solutions ont été proposées pour effectuer le passage de l'eau dans le café moulu. Les technologies divergent selon les buts recherchés et présentent chacune des avantages et des inconvénients.

Afin de simplifier et de standardiser la préparation de cafés, on utilise fréquemment des capsules contenant une quantité pré-dosée de grains moulus, mises en place dans la machine à café, et dans lesquelles on injecte l'eau chaude sous pression afin qu'elle imprègne la poudre de café pour produire un extrait plus ou moins concentré, dégageant un maximum d'arômes et de préférence recouvert d'une mousse persistante. Pour produire la mousse, il est courant de réguler la pression de l'eau chaude à une valeur approximative de l'ordre de 12 à 18 bars.

Le processus consiste à mettre la capsule en place dans la machine et à injecter l'eau chaude dans les grains de café moulu pour préparer l'extrait de café. Dans les machines connues, notamment décrites par les publications KR 2012 0117321 A et KR 2012 0117322 A, l'eau chaude est injectée de manière centrale à relativement basse pression et l'on crée un tourbillon à l'intérieur de la capsule, l'extrait de café s'écoulant librement à travers un tamis perforé disposé en regard de la fermeture étanche. Ces machines sont conçues pour recevoir des capsules ayant une forme spécifique avec une fermeture étanche doublée par un couvercle rigide perforé, ce qui les rend coûteuses et non écologiques en raison du fait que les différents composants sont produits avec des matériaux distincts, notamment des matériaux synthétiques rigides qui doivent être séparés après usage, dans le cadre d'un processus de tri sélectif des déchets.

La plupart des machines courantes de réalisation d'un extrait de café, travaillent à relativement basse pression, soit en raison de l'existence de moyens d'injection qui injectent l'eau chaude à l'arrière de la capsule, à travers le fond du corps contenant la dose de grains moulus, soit en raison d'une protection insuffisante de la membrane étanche de fermeture de la capsule, qui doit résister à des pressions élevées, de l'ordre de 12 à 18 bars, avant de se perforer pour laisser s'écouler l'extrait de café. On a constaté que l'eau chaude injectée dans la capsule, ne parvient à mouiller qu'une partie de la dose de grains de café moulu, cette partie se situant entre 30% de la dose de café pour les machines les moins performantes et 70% pour les machines les plus performantes. Il en résulte que l'efficacité des machines est fortement dépendante de leur conception et que le volume utile de café, la qualité des extraits obtenus, en matière d'arômes dissous et finalement le coût de la consommation en café, dépendent très largement de la construction des machines et de leur mode de fonctionnement.

Dans certaines machines de préparation d'un extrait de café le passage de l'eau s'effectue sensiblement verticalement, l'entrée de l'eau dans la capsule étant effectuée par le fond et la sortie de l'extrait de café étant effectuée par le film de fermeture localisé en dessous du fond, puisque la capsule occupe une position renversée dans la machine. L'eau chaude n'imprègne que partiellement le café moulu et a tendance à se trouver des passages privilégiés entre les ouvertures du fond et les ouvertures du collecteur. En fonction de la rapidité du passage de l'eau, appelé temps de mouillage, une fraction seulement de la poudre de café contenue dans la capsule est mouillée et peut libérer ses arômes. La partie de café non mouillée ne permet pas l'extraction des arômes et est en fait gaspillée.

En outre, certaines machines posent un problème d'hygiène du fait que l'utilisateur de la machine touche la capsule avec les doigts pour insérer la capsule, et que l'eau utilisée pour produire le café commence par rincer la capsule avant de servir à extraire les arômes. La température de l'eau ne permet pas d'éliminer des bactéries déposées sur la capsule en cours de manipulation qui se retrouvent dans le breuvage.

Un autre problème d'hygiène est lié, dans certaines machines, à l'existence d'eau ou de résidus de café stagnant dans le porte-capsule qui n'est pas accessible au nettoyage. La capsule très chaude en fin d'extraction est évacuée automatiquement dans une poubelle de stockage qui peut se transformer en un nid de développement bactérien.

### Exposé de l'invention

La présente invention permet de pallier l'ensemble des inconvénients mentionnés ci-dessus et propose de produire un extrait de café à l'arôme amélioré, issu d'une dose de grains moulus torréfiés utilisée en totalité et susceptible d'être présenté dans des capsules ou des dosettes spécifiques adaptées à la machine selon l'invention.

Dans ce but, la machine selon l'invention, telle que définie par les revendications, est caractérisée en ce que ledit premier sous-ensemble est agencé pour que ladite capsule soit placée verticalement, le corps en haut et le couvercle de fermeture en bas ; et ledit dispositif d'injection comporte un organe perforateur pour perforer le couvercle de fermeture étanche de ladite capsule, ledit troisième sous-ensemble étant agencé pour que l'injection de l'eau chaude sous pression se déplace verticalement de bas en haut de manière à perforer ledit couvercle de fermeture pour injecter l'eau chaude sous pression dans la dose de grains de café torréfié moulus, et pour faire monter la pression à l'intérieur du corps de la capsule d'une manière suffisante pour assurer la perforation dudit couvercle de fermeture par au moins un élément de perforation dudit couvercle de fermeture au niveau de protubérances disposées sur une surface intérieure d'un filtre ou tamis pourvu de perforations et placé au- dessus d'une chambre collectrice dudit quatrième sous-ensemble ; ledit dispositif d'injection dudit troisième sous-ensemble comportant un injecteur mobile pourvu dudit organe perforateur; et l'organe perforateur est décentré par rapport au support de capsule, le support de capsule ayant une forme qui est adaptée à la forme spécifique de ladite capsule.

Avantageusement, ledit injecteur-perforateur comporte au moins un élément tubulaire creux, équipé d'une pointe à une de ses extrémités, pour perforer ladite fermeture étanche, connecté audit générateur d'eau chaude sous pression dudit premier sous-ensemble de ladite machine, à son autre extrémité.

Selon une variante de réalisation, ledit au moins un élément tubulaire creux est agencé pour produire plusieurs jets d'eau chaude sous pression turbulents dans ladite dose de grains de café moulus, ces jets ayant des orientations angulaires différentes.

Selon une forme de réalisation préférée, ledit bloc rigide dans lequel est ménagée ladite cavité servant de logement audit corps de ladite capsule, est agencé pour avoir une première position fixe de chargement d'une capsule et une deuxième position fixe de préparation d'un extrait de café, et en ce que ledit injecteur-perforateur est mobile entre une position dans laquelle sa pointe est disposée en regard de la surface extérieure de ladite fermeture étanche de ladite capsule et une deuxième position dans laquelle sa pointe est disposée à l'intérieur de ladite capsule, après perforation de ladite fermeture étanche.

D'une manière avantageuse, ladite cavité servant de logement audit corps de ladite capsule a un axe central sensiblement vertical et en ce que ledit injecteur-perforateur comporte un axe longitudinal vertical.

Pour réaliser le meilleur mouillage des grains de café moulu, ledit axe longitudinal vertical dudit injecteur-perforateur est parallèle à l'axe central vertical de ladite capsule et l'écart entre ces deux axes verticaux est compris entre 1/5 et 4/5 de la distance de l'axe central de la capsule par rapport à son bord périphérique.

Avantageusement ledit bloc rigide du deuxième sous-ensemble comportant la cavité servant de logement audit corps de ladite capsule a une géométrie adaptée à la géométrie du corps de ladite capsule et les dimensions de ladite cavité sont telles que ladite capsule puisse y être logée sans espace entre les parois intérieures de la cavité dudit bloc rigide et les parois extérieures du corps de la capsule.

Selon une forme de réalisation avantageusement adaptée à des applications spécifiques, la section transversale dudit corps de la capsule est choisie parmi les formes ronde, carrée, hexagonale, elliptique, triangulaire avec des parois latérales lisses, plissées, crénelées avec une géométrie symétrique régulière ou asymétrique et irrégulière.

### Description sommaire des dessins

La présente invention et ses avantages apparaîtront mieux dans la description ci-dessous d'un mode de réalisation donné à titre d'exemple non limitatif, en référence aux dessins annexés dans lesquels :
- la figure 1 représente une vue en coupe d'une première variante de réalisation de la machine, illustrant une phase initiale de la préparation d'un extrait de café conformément à un premier mode opérationnel de la machine ne faisant pas partie de l'invention,
- la figure 2 représente une vue en coupe de la machine telle qu'illustrée par la figure 1, après la mise en place d'une capsule semi-rigide servant de contenant à une dose de grains de café moulus,
- la figure 3 représente une vue en coupe de la machine, telle qu'illustrée par la figure 1, après la fermeture du support porte-capsule, montrant la pénétration de l'injecteur dans le corps de la capsule,
- la figure 4 est une vue en coupe d'une seconde variante de la machine selon l'invention, comportant un injecteur escamotable, la machine étant au repos,
- la figure 5 représente une vue en coupe de la machine selon la figure 4, équipée d'une dose de grains de café moulus, avant introduction de l'injecteur,
- la figure 6 représente une vue en coupe de la machine selon la figure 4, équipée d'une dose de grains de café moulus, après introduction de l'injecteur,
- la figure 7 représente une vue en coupe de la machine selon la figure 4 après extraction du café, et
- les figures 8, 9 et 10 représentent des formes de réalisation particulières de capsules personnalisées adaptées à la machine selon l'invention.

### Meilleure manière de réaliser l'invention

En référence aux figures, la machine 10 comporte un ensemble de composants destinés à produire un extrait de café à partir d'une dose de grains de café moulus et qui sont imprégnés par une dose prédéterminée d'eau chaude sous pression pour extraire les arômes du café. A cet effet les composants peuvent être classés par sous-ensembles fonctionnels:
- un premier sous-ensemble 11 support de capsule, comportant un bloc récepteur 11a avec une cavité intérieures 11b qui sert de logement à une capsule 20 contenant une dose déterminée de grains de café moulus, auquel sont associés tous les éléments permettant d'apprêter la capsule 20, pour qu'elle puisse être remplie d'eau chaude sous pression et qu'elle puisse libérer le café;
- un deuxième sous-ensemble 12 de conditionnement de l'eau pour préparer une quantité prédéterminée d'eau chaude sous pression;
- un troisième sous-ensemble 13 de transfert de l'eau pour amener l'eau conditionnée à l'intérieur de la capsule 20 pour assurer l'imprégnation de ladite dose de grains de café moulus;
- un quatrième sous-ensemble 14 de collecte de l'extrait de café obtenu, associé à des moyens d'évacuation vers un récipient de consommation, par exemple une tasse (non représenté).

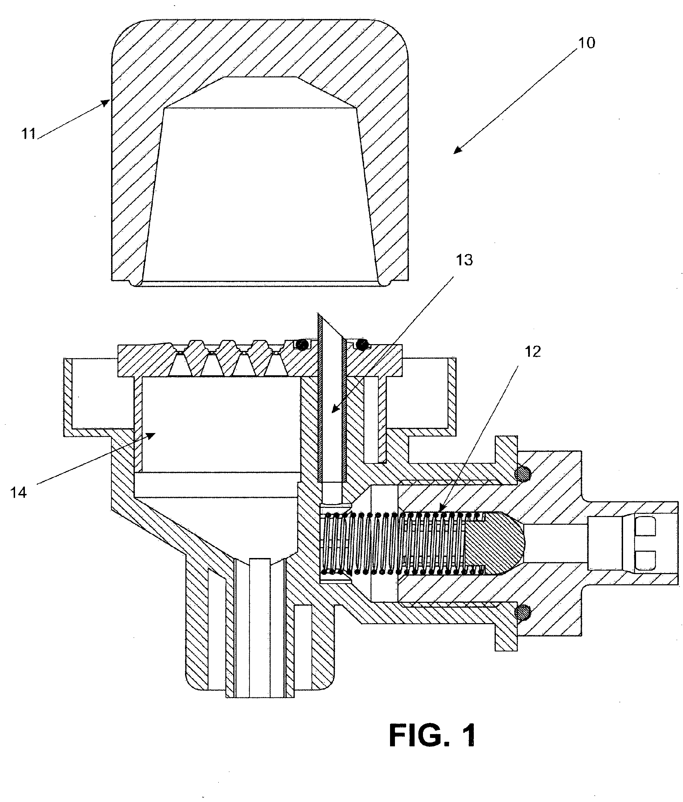

Les figures 1 à 3 représentent une première forme de réalisation avantageuse de la machine 10, qui se trouve, comme le montre la figure 1, initialement dans une position de repos, c'est-à-dire dans une phase où aucune capsule n'est mise en place en vue de préparer un extrait de café à partir d'une dose de grains de café moulus et qui sont imprégnés d'un volume prédéterminé d'eau chaude sous pression en vue d'extraire les arômes du café.

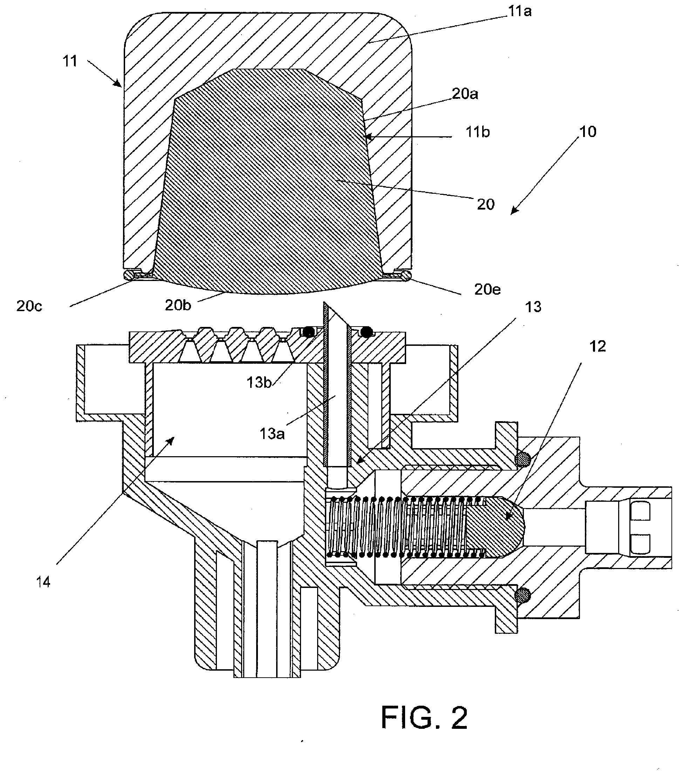

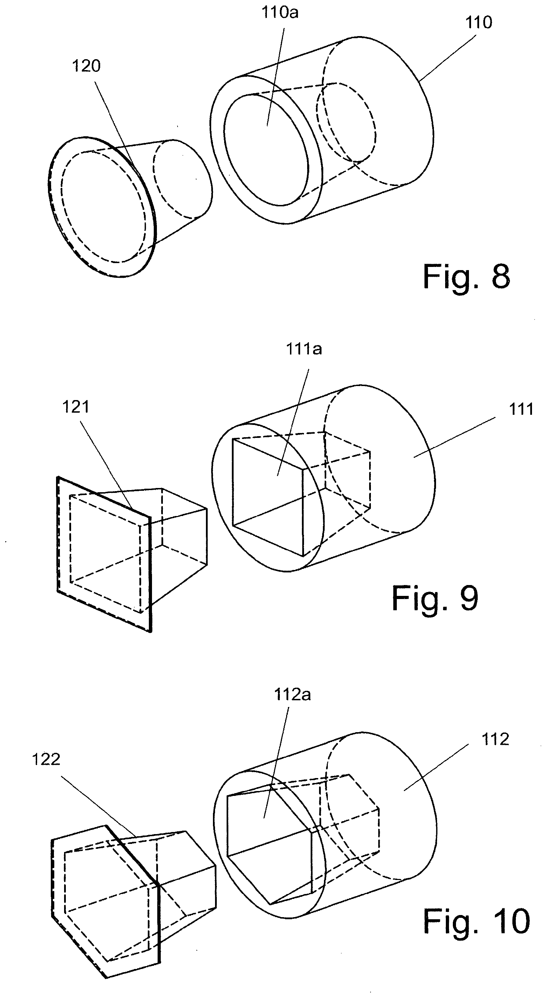

La figure 2 représente la machine 10 de la figure 1 dans une phase au cours de laquelle une capsule 20, contenant ladite dose de grains de café moulus, est en place. A cet effet, la machine 10 comporte des composants qui peuvent être classés par sous-ensembles fonctionnels. Un premier sous-ensemble 11 comporte un support d'une capsule 20 logée dans ce support, pendant la préparation d'un extrait de café. Le sous-ensemble 11 est essentiellement constitué d'un bloc 11a, dans lequel est ménagée une cavité intérieure 11b dont les parois formées dans ledit bloc 11a, ont strictement la forme et des dimensions similaires à celles du corps 20a de la capsule 20, Le corps 20a est pourvu d'un rebord 20c périphérique auquel est fixé par soudure thermique ou similaire, un couvercle de fermeture étanche 20b, sous la forme d'un film semi-rigide, réalisé de préférence en un matériau composite, en une matière synthétique compatible avec une denrée alimentaire et d'un revêtement en aluminium pour garantir l'étanchéité à l'air. Un joint d'étanchéité de forme torique 20e est interposé entre un rebord 20c périphérique du corps 20a de la capsule 20 et la surface libre du bloc 11a, entourant la cavité intérieure 11b. Le corps 20a de la capsule 20 peut avoir un profil spécifique, par exemple il peut comporter des rainures ou des gorges dont la fonction est d'imposer un positionnement ou une orientation unique de la capsule 20 dans la cavité 11a. Diverses formes de capsules sont d'ailleurs représentées à titre d'exemples par les figures 8, 9 et 10.

Lorsque la capsule 20 est en position, la machine 10 est prête pour la suite du processus de préparation d'un café. Les deux figures 1 et 2 montrent le support de la capsule 20, el l'occurrence le bloc en position ouverte, respectivement sans et avec une capsule 20. Le bloc 11a est mobile verticalement entre une position d'ouverture pour recevoir, dans sa cavité 11b ladite capsule 20 et une position de fermeture pour permettre à la machine 10 d'exécuter les fonctions d'extraction du café.

Ledit deuxième sous-ensemble 12 a pour fonction de conditionner un volume prédéterminé d'eau chaude sous pression et comporte de manière connue des moyens de dosage pour préparer le volume d'eau requis et un dispositif de chauffage de ce volume d'eau, pour l'amener à la température voulue, qui est la température d'ébullition pour que ce volume d'eau soit mis en pression par la vapeur produite. Ce deuxième sous-ensemble communique avec un troisième sous-ensemble 13, décrit ci-après et dit sous-ensemble de transfert de l'eau pour amener l'eau conditionnée à l'intérieur du corps 20a de la capsule 20.

Ledit troisième sous-ensemble 13 comporte un injecteur-perforateur 13a qui comporte au moins un élément tubulaire creux, équipé d'une pointe à une de ses extrémités, pour perforer ladite fermeture étanche 20b de la capsule 20. Dans l'exemple réalisé cet injecteur est unique, disposé verticalement et décentré par rapport au couvercle de fermeture 20b de la capsule 20. Sa pointe est agencée pour pénétrer automatiquement dans la capsule, après avoir perforé le couvercle de fermeture 20b, lorsque le bloc 11a est abaissé vers le quatrième sous-ensemble 14 pour recueillir ledit extrait de café. Etant donné que l'injecteur-perforateur 13a est raccordé au générateur d'eau chaude sous pression, le volume prédéterminé d'eau chaude sous pression est projeté dans la dose de café moulu qu'elle imprègne complètement pour former un extrait de café contenant un maximum d'arômes.

On notera que selon cette réalisation, et contrairement aux dispositifs connus, la capsule est complètement enfermée dans la cavité, maintenue par les parois intérieures de la cavité du bloc 11a et retenue par la plaque filtre rigide, est parfaitement confinée et la dose de grains de café moulu peut être soumise à des pressions importantes, la dose de café est entièrement mouillée et délivre l'extrait de café en libérant les arômes de manière totale. Contrairement aux systèmes connus où la mouillabilité est comprise entre 30 et 70%, dans la réalisation selon l'invention, la mouillabilité est totale, de sorte que l'on peut utiliser des capsules ne contenant que 75%, voire 50% de grains de café par rapport aux capsules utilisées à ce jour. En outre, étant donné que l'enveloppe des grains est tenue par les parois du bloc et du filtre rigide, il est possible d'utiliser des enveloppes souples et relativement fragiles, sans risquer leur rupture sous l'effet de la pression.

Selon la première forme de réalisation l'injecteur-perforateur 13a est fixe et proéminent de sorte que l'introduction de son embout à pointe 13b à l'intérieur de la capsule s'effectue automatiquement au moment où le bloc 11a, portant la capsule 20 descend en direction du quatrième sous-ensemble 14, à savoir le sous-ensemble de collecte de l'extrait de café. La pointe 13b taillée en biseau perfore le couvercle de fermeture étanche 20b, et libère l'eau chaude sous pression pour imprégner les grains de café moulus. On notera que dans cette variante, l'injecteur-perforateur 13a est fixe et que la perforation du couvercle de fermeture étanche de la capsule est uniquement due au déplacement du support 11a.

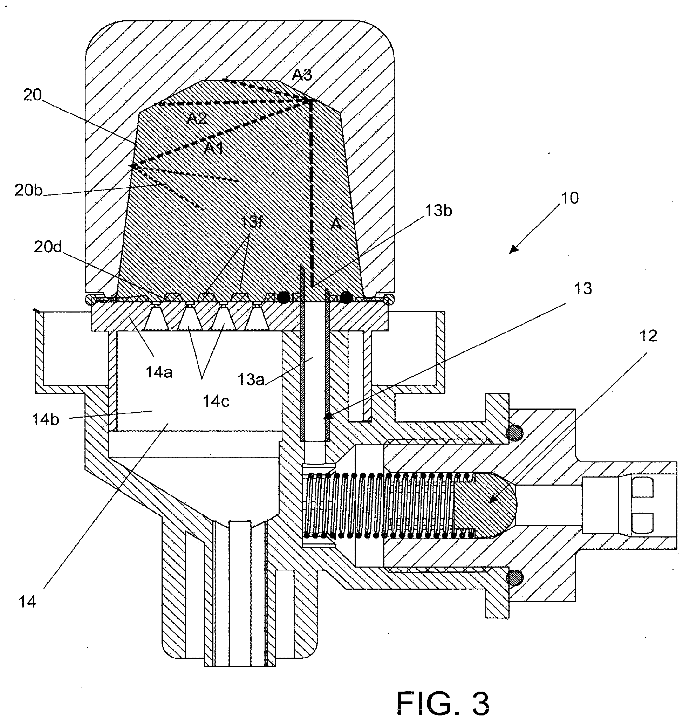

La figure 3 illustre la machine après la fermeture du bloc 11a servant de support porte-capsule et après la pénétration de l'injecteur-perforateur 13a dans le corps 20a de la capsule 20, par son embout à pointe 13b. L'injectgeur-perforateur 13a est décentré par rapport à la capsule 20, ce qui a pour effet de forcer le passage de l'eau chaude sous pression vers le haut, à savoir le fond du corps 20a de la capsule 20, contre lequel le jet d'eau A est projeté et réfléchi contre la paroi latérale. L'expérience montre que le jet A réfléchi est dispersé en une pluralité de jets A1, A2, A3,....,An qui imprègnent rapidement la totalité de la dose de grains de café moulus pour produire un extrait de café contenant un maximum d'arômes, d'où la production d'un café au goût exceptionnel.

Sous l'effet de la pression qui est induite dans la capsule 20, le couvercle de fermeture 20b est perforé au niveau des protubérances 13f qui sont disposées sur la surface intérieure d'une plaque filtre rigide 14a pourvue de perforations 14b et placé au-dessus de la chambre collectrice 14c du sous-ensemble 14 agencée pour collecter l'extrait de café produit et pour l'évacuer par un conduit central 15 vers un récepteur, par exemple une tasse à café.

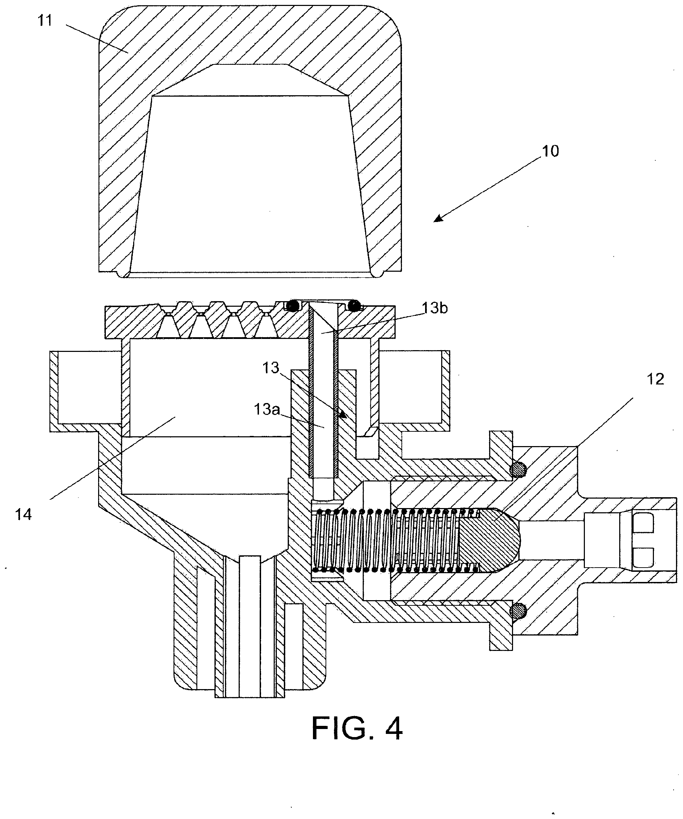

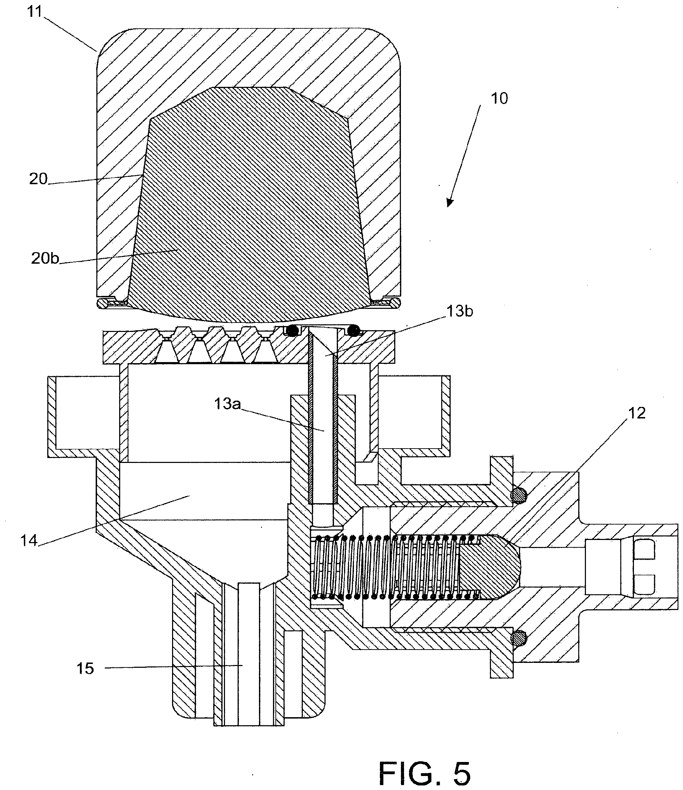

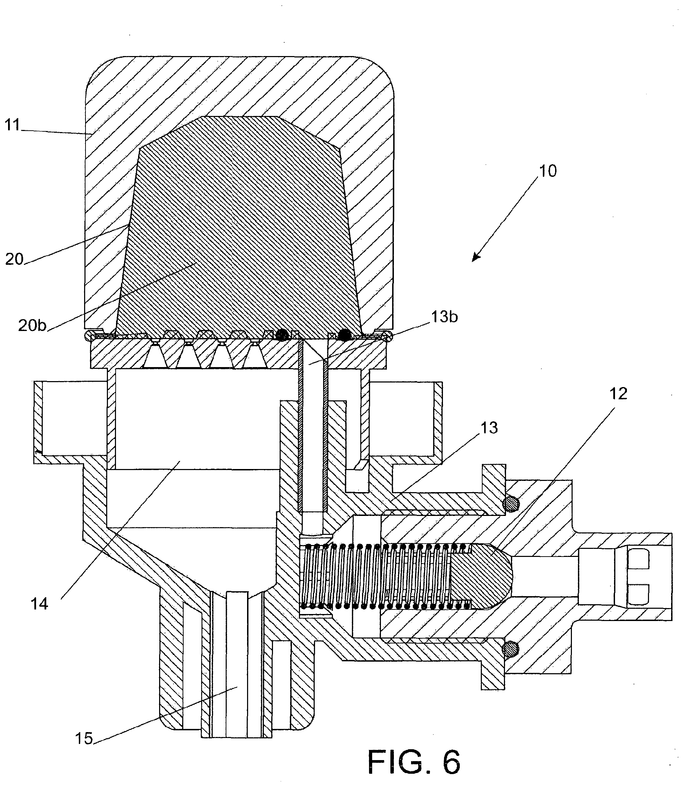

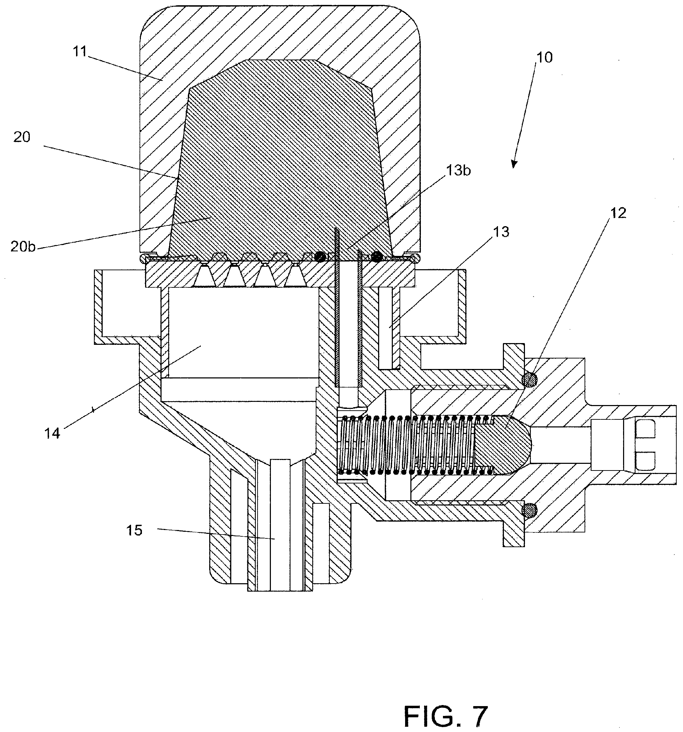

La seconde variante de réalisation de la machine selon l'invention, illustrée par les figures 4 à 7 diffère de la précédente, décrite en référence aux figures 1 à 3 en ce que l'injecteur 13a est mobile au lieu d'être fixe. La figure 4 montre la machine dans sa position de repos, avant la mise en place d'une capsule 20. La mise en place de la capsule dans le bloc 11a, illustrée par la figure 5 est identique à celle de la variante précédente. Une première différence importante apparaît au moment de la fermeture de la cavité intérieure 11b du bloc 11a, (voir la figure 6) c'est-à-dire au moment où le bloc 11a est amené dans sa position dite d'extraction du café, à savoir au moment où le support 11a est abaissé sur le châssis fixe de la machine 10. Alors que dans l'exemple précédent cette descente entrainait automatiquement la pénétration de la pointe 13b de l'injecteur-perforateur 13a dans la capsule 20, cette capsule reste intacte au cours de la phase de descente du bloc 11a, dans la deuxième variante. La perforation du couvercle de fermeture étanche 20b de la capsule 20, par l'injecteur-perforateur 13a est une opération indépendante, commandée après la mise en position de la capsule. Dans la pratique l'injecteur-perforateur 13a mobile se déplace vers le haut de telle manière que sa pointe traverse le film semi-rigide qui constitue le couvercle de fermeture étanche 20b de la capsule 20 et s'enfonce dans la dose de grains de café moulus pour que le ou les jets d'eau chaude sous pression puissent mouiller intégralement ladite dose et produire un café de qualité qui sera collecté dans le sous-ensemble collecteur 14 et s'écouler à travers un conduit 15 disposé à la sortie du collecteur 14.

Dans la description qui précède il a été question d'un seul jet d'eau chaude sous pression. On notera que le principe sur lequel est basée la présente machine peut être appliqué sur une machine à plusieurs jets droits ou obliques, dans le but d'obtenir une imprégnation maximale de la dose de café moulu ou de poudre de café. Par ailleurs, rien n'interdit l'utilisation de la machine selon l'invention pour faire toutes sortes de variétés de thé ou d'autres boissons, par exemple des boissons dites chocolatées.

En effet, la machine selon l'invention présente une caractéristique fondamentale qui est de garantir une mouillabilité optimale du produit contenu dans la capsule. De ce fait, quel que soit le produit, elle garantit une extraction optimale des arômes et par conséquent un résultat inégalé.

Un avantage particulier de la machine selon l'invention est lié à la possibilité de réaliser des cartouches pré-dosées de mouture de café ayant une forme spécifique et surtout d'adapter le support porte-capsules à la forme spécifique des capsules. Cette approche est illustrée par les figures 8, 9 et 10 illustrant respectivement une capsule 120 de section transversale ronde, une capsule 121 de section transversale carrée et une capsule 122 de section transversale hexagonale. Il est bien entendu que ces formes de réalisation représentées à titre d'exemples, ne sont pas uniques et pourront être remplacées par des formes à section elliptique, triangulaires ou plus complexes, avec des parois striées, plissées ou autres. Il est essentiel de noter que les parois latérales et le fond de chaque type de capsule correspond à une forme de la cavité réceptrice ou logement correspondant 110a des capsules 120, 111a des capsules 121 et 112a des capsules 122, ménagées respectivement dans les blocs porte-capsules 110, 111 et 112. Cette remarque est fondamentale parce que cette caractéristique règle totalement les problèmes d'hygiène évoqués ci-dessus. En effet, la capsule est serrée contre les parois de la cavité et l'eau nécessaire pour la préparation du café entre directement dans la capsule sans rincer les parois extérieures de la capsule comme c'est le cas dans les machines actuelles. En effet, l'eau pénètre directement dans la capsule par la face avant et ressort par le même côté. Aucune fuite d'eau n'est possible vers les parois extérieures de la capsule étant donné qu'aucun espace n'est ménagé entre la capsule et le logement qui la reçoit.

C'est ainsi que la géométrie du bloc dans lequel est formée la cavité de réception de la capsule, peut être adaptée en taille et en dimensions pour permettre à la machine de produire les extraits de café souhaités par le consommateur, notamment des grands cafés ou des cafés dits « express » ou d'autres boissons, comme des chocolats chauds ou des bouillons et similaires.

La machine de l'invention n'est pas limitée aux formes de réalisation décrites, mais est susceptible d'être ajustée dans le cadre de modifications évidentes pour l'homme de l'art et qui s'inscrivent dans le cadre de la présente invention telle que définie par la portée des revendications.

## Revendications

1. Machine pour produire un extrait de café par le passage forcé d'une quantité déterminée d'eau chaude sous pression, injectée dans une dose de grains de café torréfié moulus qui sont contenus dans une capsule (20, 120, 121, 122), constituée d'un corps (20a) et d'un couvercle de fermeture étanche (20b) rendu solidaire dudit corps, ladite capsule ayant une forme spécifique, ladite machine comportant :
un premier sous-ensemble (11) comportant un support de ladite capsule (20) pourvu d'une cavité servant de logement audit corps (20a) de ladite capsule (20) ;
un deuxième sous-ensemble (12) comportant un générateur d'eau chaude sous pression ;
un troisième sous-ensemble (13) équipé d'un dispositif d'injection pour injecter ladite quantité d'eau chaude sous pression dans ladite capsule (20) ; et
un quatrième sous-ensemble (14) pourvu de moyens pour recueillir ledit extrait de café,
**caractérisée en ce que :**
ledit premier sous-ensemble (11) est agencé pour que ladite capsule soit placée verticalement, le corps en haut et le couvercle de fermeture en bas ;
ledit dispositif d'injection comporte un organe perforateur pour perforer le couvercle de fermeture étanche de ladite capsule, ledit troisième sous-ensemble (13) étant agencé pour que le dispositif d'injection de l'eau chaude sous pression se déplace verticalement de bas en haut de manière à perforer ledit couvercle de fermeture pour injecter l'eau chaude sous pression dans la dose de grains de café torréfié moulus, et pour faire monter la pression à l'intérieur du corps de la capsule d'une manière suffisante pour assurer la perforation dudit couvercle de fermeture par au moins un élément de perforation dudit couvercle de fermeture au niveau de protubérances (13f) disposées sur une surface intérieure d'un filtre ou tamis (14a) pourvu de perforations (14c) et placé au-dessus d'une chambre collectrice (14b) dudit quatrième sous-ensemble ;
ledit dispositif d'injection dudit troisième sous-ensemble (13) comportant un injecteur mobile (13a) pourvu dudit organe perforateur ; et
l'organe perforateur est décentré par rapport au support de capsule, le support de capsule ayant une forme qui est adaptée à la forme spécifique de ladite capsule.

2. Machine (10) selon la revendication 1, dans laquelle ledit injecteur (13a) se présente sous la forme d'une aiguille rigide configurée pour déboucher à l'intérieur de la capsule, pour perforer ladite fermeture étanche (20b), connecté audit générateur d'eau chaude sous pression dudit deuxième sous-ensemble (12) de ladite machine (10), à son autre extrémité.

3. Machine (10) selon la revendication 1, **caractérisée en ce que** ledit dispositif d'injection est agencé pour produire plusieurs jets d'eau chaude sous pression (A1, A2, A3,...An) turbulents dans ladite dose de grains de café moulus, ces jets ayant des orientations angulaires différentes.

4. Machine (10) selon l'une quelconque des revendications 1 à 3, **caractérisée en ce que** ledit support de capsule est agencé pour avoir une position ouverte portant une capsule (20) et une position fermée, et **en ce que** ledit injecteur (13a) est mobile entre une position dans laquelle sa pointe est configurée pour être disposée en regard de la surface extérieure de ladite fermeture étanche de ladite capsule (20) et une deuxième position dans laquelle sa pointe est configurée pour être disposée à l'intérieur de ladite capsule (20), après perforation de ladite fermeture étanche.

5. Machine (10) selon l'une quelconque des revendications 1 à 4, **caractérisée en ce que** ledit support de capsule comportant la cavité servant de logement audit corps (20a) de ladite capsule (20) a une géométrie adaptée à la géométrie du corps (20a) de ladite capsule (20) et **en ce que** les dimensions de ladite cavité sont telles que ladite capsule puisse y être logée sans espace entre les parois intérieures de la cavité dudit support de capsule et les parois extérieures du corps de la capsule.

6. Machine (10) selon la revendication 5, dans laquelle la forme de la cavité servant de logement dudit corps de ladite capsule est choisie parmi les formes ronde, carrée, hexagonale, elliptique, triangulaire avec des parois latérales lisses, plissées, crénelées.

7. Machine selon l'une quelconque des revendications 1 à 6, dans laquelle l'injecteur (13a) est unique, disposé verticalement, décentré par rapport au couvercle de fermeture de la capsule, l'injecteur étant proéminent et taillé en biseau de telle manière qu'il pénètre automatiquement dans la capsule après avoir perforé le couvercle de fermeture de la capsule.

## Patentansprüche

1. Maschine zum Zubereiten eines Kaffeeextrakts durch Zwangsdurchleitung einer bestimmten Heißwassermenge unter Druck, injiziert in eine Dosis gemahlener gerösteter Kaffeebohnen, die in einer Kapsel (20, 120, 121, 122) enthalten sind, die aus einem Körper (20a) und einem wasserdichten Verschlussdeckel (20b) besteht, der einstückig mit dem besagten Körper hergestellt ist, wobei die besagte Kapsel eine spezifische Form hat, wobei die besagte Maschine Folgendes umfasst:
eine erste Untereinheit (11), die einen Träger der besagten Kapsel (20) umfasst, der mit einem Hohlraum versehen ist, der als Aufnahme für den besagten Körper (20a) der besagten Kapsel (20) dient;
eine zweite Untereinheit (12), die einen unter Druck stehenden Heißwassergenerator umfasst;
eine dritte Untereinheit (13), die mit einer Injektionsvorrichtung zum Injizieren der besagten Heißwassermenge unter Druck in die besagte Kapsel (20) ausgestattet ist; und
eine vierte Untereinheit (14), die mit Mitteln zum Sammeln des besagten Kaffeeextrakts ausgestattet ist,
**dadurch gekennzeichnet, dass:**
die besagte erste Untereinheit (11) so angeordnet ist, dass die besagte Kapsel senkrecht angeordnet ist, wobei sich der Körper oben und der Verschlussdeckel unten befindet;
wobei die besagte Injektionsvorrichtung ein Perforationselement zum Perforieren des wasserdichten Verschlussdeckels der besagten Kapsel umfasst, wobei die besagte dritte Untereinheit (13) so angeordnet ist, dass sich die Injektionsvorrichtung für unter Druck stehendes heißes Wasser senkrecht von unten nach oben bewegt, um den besagten Verschlussdeckel zu perforieren, um unter Druck stehendes heißes Wasser in die Dosis gemahlener gerösteter Kaffeebohnen zu injizieren und um den Druck im Inneren des Kapselkörpers in einer ausreichenden Weise zu erhöhen, um die Perforation des besagten Verschlussdeckels durch mindestens ein Perforationselement des besagten Verschlussdeckels auf der Höhe von Vorsprüngen (13f) sicherzustellen, die auf einer inneren Oberfläche eines Filters oder Siebes (14a) angeordnet sind, der/das mit Perforationen (14c) versehen und oberhalb einer Sammelkammer (14b) der besagten vierten Untereinheit angeordnet ist;
wobei die besagte Injektionsvorrichtung der besagten dritten Untereinheit (13) einen beweglichen Injektor (13a) umfasst, der mit dem besagten Perforationselement versehen ist; und
wobei das Perforationselement relativ zum Kapselträger dezentriert ist, wobei der Kapselträger eine Form aufweist, die an die spezifische Form der besagten Kapsel angepasst ist.

2. Maschine (10) nach Anspruch 1, bei der der besagte Injektor (13a) die Form einer starren Nadel aufweist, die so konfiguriert ist, dass sie in das Innere der Kapsel mündet, um den besagten wasserdichten Verschluss (20b) zu perforieren, der an seinem anderen Ende mit dem unter Druck stehenden besagten Heißwassergenerator der besagten zweiten Untereinheit (12) der besagten Maschine (10) verbunden ist.

3. Maschine (10) nach Anspruch 1, **dadurch gekennzeichnet, dass** die besagte Injektionsvorrichtung so angeordnet ist, dass sie in der besagten Dosis gemahlener Kaffeebohnen mehrere turbulente Strahlen heißen Wassers unter Druck (A1, A2, A3, ...An) erzeugt, wobei diese Strahlen unterschiedliche Winkelausrichtungen haben.

4. Maschine (10) nach einem der Ansprüche 1 bis 3, **dadurch gekennzeichnet, dass** der besagte Kapselträger so angeordnet ist, dass er eine offene Position, die eine Kapsel (20) trägt, und eine geschlossene Position hat, und dadurch, dass der besagte Injektor (13a) zwischen einer Position, in der seine Spitze so konfiguriert ist, dass sie der Außenfläche des besagten wasserdichten Verschlusses der besagten Kapsel (20) zugewandt ist, und einer zweiten Position, in der seine Spitze so konfiguriert ist, dass sie nach der Perforation des besagten wasserdichten Verschlusses in dem Inneren der besagten Kapsel (20) angeordnet werden kann, beweglich ist.

5. Maschine (10) nach einem der Ansprüche 1 bis 4, **dadurch gekennzeichnet, dass** der besagte Kapselträger, der den Hohlraum umfasst, der als Aufnahme für den besagten Körper (20a) der besagten Kapsel (20) dient, eine an die Geometrie des Körpers (20a) angepasste Geometrie der besagten Kapsel (20) aufweist und dadurch, dass die Abmessungen des besagten Hohlraums derart sind, dass die besagte Kapsel dort untergebracht werden kann, ohne dass zwischen den Innenwänden des Hohlraums des besagten Kapselträgers und den Außenwänden des Kapselkörpers Platz ist.

6. Maschine (10) nach Anspruch 5, bei der die Form des Hohlraums, der als Aufnahme des besagten Körpers der besagten Kapsel dient, aus runden, viereckigen, sechseckigen, elliptischen, dreieckigen Formen mit glatten, plissierten, gezackten Seitenwänden ausgewählt ist.

7. Maschine nach einem der Ansprüche 1 bis 6, bei der der Injektor (13a) einzeln, senkrecht angeordnet und in Bezug auf den Verschlussdeckel der Kapsel dezentriert ist, wobei der Injektor so vorstehend und abgeschrägt ist, dass er automatisch in die Kapsel eindringt, nachdem er den Verschlussdeckel der Kapsel perforiert hat.

## Claims

1. Machine for producing a coffee extract by the forced passage of a determined quantity of hot water under pressure, injected into a dose of ground roasted coffee beans which are contained in a capsule (20, 120, 121, 122), consisting of a body (20a) and a tight closure cover (20b) made integral with said body, said capsule having a specific shape, said machine comprising:
a first subassembly (11) comprising a support of said capsule (20) provided with a cavity serving as a housing for said body (20a) of said capsule (20);
a second subassembly (12) comprising a generator of hot water under pressure;
a third subassembly (13) equipped with an injection device for injecting said quantity of hot water under pressure into said capsule (20); and
a fourth subassembly (14) provided with means for collecting said coffee extract,
**characterized in that:**
said first subassembly (11) is arranged so that said capsule is placed vertically, the body at the top and the closure cover at the bottom;
said injection device comprises a perforating member for perforating the tight closure cover of said capsule, said third subassembly (13) being arranged so that the device for injecting the hot water under pressure moves vertically from bottom to top so as to perforate said closure cover to inject the hot water under pressure into the dose of ground roasted coffee beans, and to increase the pressure inside the body of the capsule in a manner sufficient to ensure the perforation of said closure cover by at least one perforation element of said closure cover at protuberances (13f) arranged on an inner surface of a filter or sieve (14a) provided with perforations (14c) and placed above a collecting chamber (14b) of said fourth subassembly;
said injection device of said third subassembly (13) comprising a movable injector (13a) provided with said perforating member; and
the perforating member is off-centre in relation to the capsule support, the capsule support having a shape which is adapted to the specific shape of said capsule.

2. Machine (10) according to claim 1, wherein said injector (13a) is in the form of a rigid needle configured to open into the capsule, to perforate said tight closure (20b), connected to said generator of hot water under pressure of said second subassembly (12) of said machine (10), at its other end.

3. Machine (10) according to claim 1, **characterized in that** said injection device is arranged to produce several turbulent jets of hot water under pressure (A1, A2, A3,... An) in said dose of ground coffee beans, these jets having different angular orientations.

4. Machine (10) according to any one of claims 1 to 3, **characterized in that** said capsule support is arranged to have an open position carrying a capsule (20) and a closed position, and **in that** said injector (13a) is movable between a position in which its point is configured to be arranged facing the outer surface of said tight closure of said capsule (20) and a second position in which its point is configured to be arranged inside said capsule (20), after perforation of said tight closure.

5. Machine (10) according to any one of claims 1 to 4, **characterized in that** said capsule support comprising the cavity serving as a housing for said body (20a) of said capsule (20) has a geometry adapted to the geometry of the body (20a) of said capsule (20) and **in that** the size of said cavity is such that said capsule can be housed therein without space between the inner walls of the cavity of said capsule support and the outer walls of the body of the capsule.

6. Machine (10) according to claim 5, wherein the shape of the cavity serving as a housing of said body of said capsule is chosen from round, square, hexagonal, elliptical, triangular shapes with smooth, pleated, crenelated side walls.

7. Machine according to any one of claims 1 to 6, wherein the injector (13a) is unique, arranged vertically, off-centre in relation to the closure cover of the capsule, the injector being prominent and bevelled in such a way that it automatically penetrates into the capsule after having perforated the closure cover of the capsule.
